# EUROPEAN PATENT SPECIFICATION

(11) **EP 2 708 389 B1**
(45) Date of publication and mention of the grant of the patent: **15.06.2022**
(21) Application number: 13004535.4
(22) Date of filing: 17.09.2013
(51) Int. Cl.: B60G 17/017, B60G 17/052

(54) **Trailer vehicle with automatic level control**
Anhänger mit automatischer Niveauregulierung
Remorque avec commande de niveau automatique

(30) Priority: 17.09.2012 GB 201216558
(43) Date of publication of application: 19.03.2014
(73) Proprietor: Knorr-Bremse Systems for Commercial Vehicles Limited, Bristol BS16 7FE (GB)
(72) Inventor: Fry, Matthew, Bristol, BS16 7FE (GB)
(74) Representative: JENSEN & SON

(56) References cited:
- EP-A1- 2 489 531
- WO-A1-2006/135326
- WO-A2-2006/015746
- US-A1- 2005 110 229
- US-A1- 2009 184 480

## Description

The present invention relates to a control system for a trailer vehicle adapted to automatically control the height of a trailer.

Vehicle trailers such as those used in the distribution of goods are provided with an air suspension system, In which the suspension Is provided by airbags at each axle end. The pressure in the airbags is adjustable depending on loading conditions on the trailer.

As loading bays used in distribution depots are not of a standard height, a raise/lower valve is provided so that the height of the trailer can be changed from the drive position, which is the ideal height for driving conditions, by increasing or reducing the amount of air In the airbags. Raise/lower valves are typically manually controlled using a lever or buttons but it is known to provide the suspension system with a so-called reset to ride valve, which ensures that the trailer is automatically set to the correct height for driving conditions in the event that the trailer is driven in a raised or lowered position. The raising and lowering of a trailer in the loading bay is therefore essentially a manual operation under control of the driver or operator.

EP1557305 relates to a vehicle trailer comprising a superstructure on a chassis and a tow shaft. The trailer road wheels being sprung against the chassis by air springs. The device comprises air pressure adjustment means which sets the support load of the tow shaft and the air pressure in one set of air springs In relation to the other set. The device further comprises a pressure reduction between the front and rear springs.

An air spring valve sets the level of the air springs, with an inflow connection linked to the compressed air supply, and at least one outflow connection for the rear air springs and to the front air springs through the pressure reduction valves.

US2004/0201195 discloses a height control valve for use In a vehicle suspension system. Said height control valve is provided with a universal mounting for allowing greater flexibility in the mounting of the height control valve to a vehicle frame. In addition, the height control valve has a position indicator to assist an installer In aligning a valve element contained within the valve according to a selected mounting position.

FR2616721 relates to a device for setting the base of an industrial vehicle to a specified level and for keeping it at that level so that loading or unloading can occur. The device comprises actuating means powered by a power source, controlled by command means and connected to adjustment means in order to bring the base of the industrial vehicle to the level of a loading and/or unloading bay and to keep the base at the specified level irrespective of any load and/or unload stresses on the vehicle.

JP06-219218 discloses a device to prevent operation of audio equipment in case of theft. The device comprises theft detecting means adapted to detect theft of audio equipment from an automobile, a circuit breaking element arranged to cut off a circuit in response to a signal from the detecting means and a break detecting means arranged to detect breakage of a circuit by the circuit breaking element.

EP2489531 discloses a system for adjusting the height of a trailer when reversing towards a docking bay. US2009/0184480 discloses a truck based system for adjusting the chassis height of the truck in dependence on a location signal. WO2006015746 discloses a truck levelling control system.

The present invention therefore seeks to improve the control of trailer height.

According to the present invention there is provided a trailer vehicle with a trailer vehicle function control system for a trailer in accordance with the characteristics of Claim 1

Preferably, the electronic control unit receives data from at least one of a positioning system and a vehicle telematics system. Preferably, the positioning system is GPS.

Preferably, the trailer height Is adjusted based on the determined location of the trailer.

Preferably, the system further comprises a manual reset key to enable the system to recalculate or update height in the event the information received form the location means is Inaccurate.

Preferably, the system further comprises programmable storage means adapted to store Information on specific locations.

One of the main advantages of this system is that trailer height is determined automatically and thus is independent from driver control.

Further, the system allows trailer height to be adjusted *en route* to the destination; accordingly, the trailer is at the appropriate height when it arrives at the destination and consequently, loading and unloading times are reduced. Moreover, loading and unloading operations are much simpler because there is not need to instruct or help the driver to adjust trailer height and thus the operation does not require human intervention at sites where the process Is automated. In addition, as the height is automatically adjusted by the time the vehicle arrives at the loading bay the engine need not be on while loading or unloading operations are occurring.

Likewise, in the event the vehicle Is likely to encounter overhead obstacles, such as a low bridge or tunnel, trailer height can be automatically adjusted *en route* to prevent accidents.

An exemplary embodiment of the invention will now be described in greater detail with reference to the drawings in which:

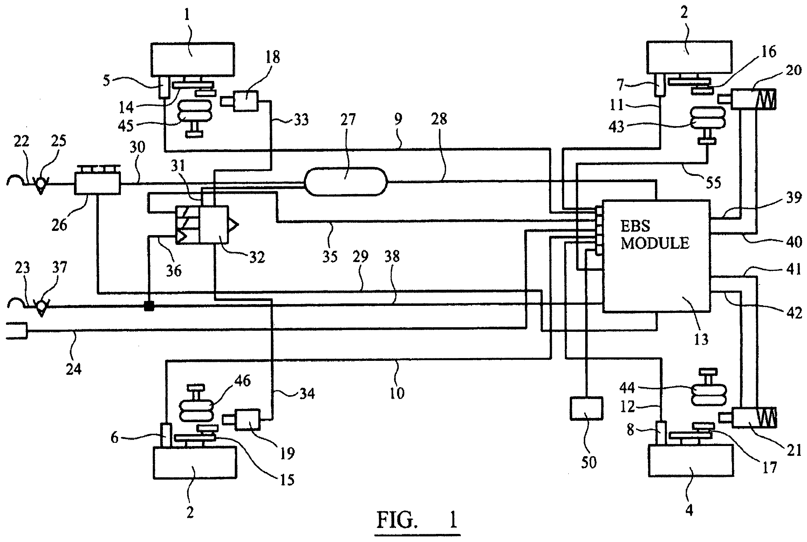

Figure 1 is a schematic representation of an electronic braking system,
Fig. 2 shows a schematic diagram of the brake control with a trailer access microcontroller

The utility vehicle trailer has a steerable front axle with front wheels 1, 2 and a rear axle with rear wheels 3, 4. Rotational wheel speed sensors 5-8 are in each case assigned to the front wheels 1, 2 and the rear wheels 3, 4, and are connected by way of electric lines 9-12 with an electropneumatic brake pressure control module 13 (EBS module) which is primarily assigned to the rear axle brakes. One brake 14-17 is in each case assigned to the front wheels 1, 2 and the rear wheels 3, 4, which brake 14-17 can be applied by means of brake cylinders 18, 19 of the front axle or spring-loaded brake cylinders 20, 21 of the rear axle.

The braking system of the trailer vehicle can be connected by way of three connections, specifically a pneumatic supply line connection 22, a pneumatic control line connection 23 and an electric control connection 24, with the braking system of a tractor or a further trailer. The electric control line 24 provides the ISO 11992 CAN data connection.

The supply line connection 22 is connected by way of a filter valve 25 and a parking valve 26 with an air brake reservoir 27. From the air brake reservoir 27, a pneumatic line 28, 30 leads to a supply input of the pressure control module 13 and electropneumatic valve 32, which Is adapted to supply ABS functionality. In addition, a pneumatic line 29 branches off the parking valve 26 to the pressure control module 13. A pneumatic line 30 extends between the parking valve 26 and the air brake reservoir 27.

The electropneumatic valve 32 is assigned jointly to both brake cylinders 18, 19 of the front axle and is connected with the brake cylinder 18 by way of a pneumatic line 33 and with the brake cylinder 19 by way of a pneumatic line 34. The valve 32 has two electric control inputs which are connected by way of "one" electric communication line 35 such as CAN, shown here only schematically, with the pressure control module 13.

Furthermore, the valve 32 has a pneumatic control input 36 which is connected by way of a filter valve 37 with the pneumatic control connection 23. The pneumatic control input 36 is also connected by way of a pneumatic control line 38 with a pneumatic control input of the pressure control module 13. The pressure control module 13 has an Integrated pressure sensor (not shown) which measures the pressure In the pneumatic control line 38, that Is, the control pressure present at the pneumatic control input 36 of the electropneumatic valve, which control pressure is identical to the maximal pressure which can be controlled into the brake cylinders 18, 19.

The pressure control module 13 has pneumatic outputs 39-42 which are connected by way of assigned pneumatic lines with the spring brake cylinders 20 or 21.

Furthermore, air bags 43, 44 are provided at the rear axle and permit a determination of the axle load, particularly of the dynamic axle load during braking and starting. The air bags 43, 44 are connected by way of pneumatic lines 55 with the pressure control module 13. The pressure control module 13 has an integrated pressure sensor (not shown) which measures the pressure in the air bags 43, 44. Correspondingly the pressure in airbags 45, 46 provided at the front axle, which here are electrically controlled, may be detected by an optional pressure transducer. The pressure in the airbags 43-46 can be increased or decreased so as to adjust the height of the trailer.

To provide stability control a lateral acceleration sensor is provided, which may also be integrated with a yaw sensor, and the output of the lateral acceleration sensor is fed to the pressure control module/ECU 13. Typically the lateral acceleration sensor is integrated into the pressure control module/ECU 13. In the event that lateral acceleration on the trailer is detected, the pressure control module can provide for increased brake force at the front and/or rear axles. When the lateral acceleration sensor detects lateral acceleration on the trailer in which it is installed, the sensor generates a signal setting the stability control to active.

The pressure control module 13 receives data from the wheel speed sensors on the trailer and also receives a signal indicating whether the brake pedal in the vehicle cab is depressed or not, as well as the brake pressure demand.

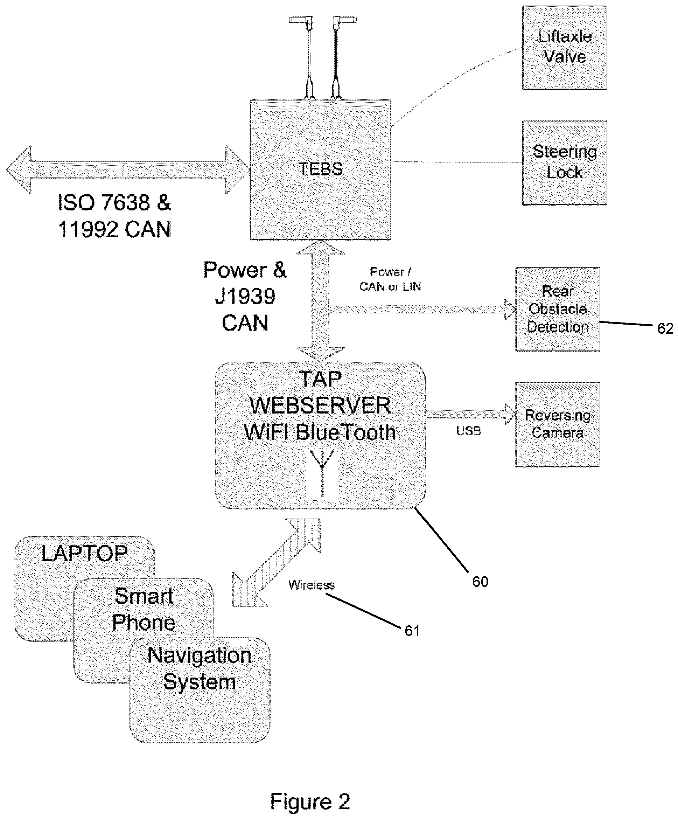

Figure 2 shows schematically the arrangement of the trailer access microcontroller with the trailer electronic braking system. The trailer electronic braking system is only partially illustrated for reasons of clarity but includes the pressure control module 13 which is shown receiving wheel speed signals from wheel speed sensors 5,6. The pressure control module 13 also receives inputs from the lift axles showing the position of the lift axles and also the steering lock. The pressure control module 13 also receives power and data via an electrical connection from the tractor and is also attached to an ISO 11992 CAN databus .

A trailer access point (TAP) comprising microcontroller 60 with a CAN interface is also provided, which is powered from the electrical connection. The microcontroller 60 itself comprises an interface to the on-board electronic systems and the trailer electronic braking system and an interface for sending and receiving data in a wireless format 61.

The communications interface 61 can comprise one or more of a 802.11 transceiver or Bluetooth transceiver or radio transceiver. 802.11 and Bluetooth signals can have a reception and transmission range of up to 100 metres in free air. The trailer access point is connected to the CAN bus on the trailer and so is able to receive data from other devices on the CAN bus. The trailer access point can further be provided with USB ports, which enables the addition of peripheral devices on the trailer. An exemplary device on the CAN bus is the rear obstacle detector 62 and an exemplary device attached to the USB port is a reversing camera. USB is preferable in this case as the camera would generate large amounts of data compared to the remaining data on the CAN bus.

The trailer access point can be mounted in a housing similar to that used for a trailer information module but without a display being necessary. If a display is needed, it would be possible to use a bistable cholestatic display or zero power LCD display.

When the trailer enters a depot, the trailer access point makes a transaction with the depot gate, which can have destination information provided to it. The depot gate can, for example, provide the information to the trailer access point that the trailer should go to Dock 4 and the trailer should be set at a height of 800mm. The trailer height can then be adjusted under control of the trailer brake control unit 13. If the trailer is provided with electronic levelling control, the desired height can be provided to the electronic levelling control controller. For trailers where the air supply into the airbags is controlled using solenoid valves, adjustment of the trailer height is equally possible by control of the solenoids.

Modern commercial vehicles can be provided with GPS integrated telematics to allow, amongst other things, to track the vehicle. Thus, location and road data is generated and stored. In the present system GPS and telematics data is further fed to the electronic brake control unit 13 and the levelling control via the CAN bus 35. As a result, the system can determine height required at a specific location and adjust height accordingly without intervention from the vehicle operator.

## Claims

1. A trailer having a trailer vehicle function control system, the system comprising an electronic control unit (13) and comprising a trailer access point microcontroller (60), which electronic control unit (13) is adapted to control the height of the trailer and a CAN bus (35), wherein the control system further comprises communication means adapted to receive data concerning trailer height, which data is passed to the electronic control unit (13), wherein the electronic control unit (13) compares the actual trailer height with the received data concerning trailer height and if the actual trailer height is different to the received data trailer height, adjusts the trailer height to the received data trailer height, wherein the system further comprises a standards compliant communications interface (61) adapted to communicate wirelessly with an electronic device remote from the communications interface (61), wherein when the communications interface (61) receives data from the device concerning trailer height, the electronic control unit (13) adjusts the trailer height en route to the received data trailer height, wherein the electronic control unit is a trailer electronic brake control unit, which electronic brake control unit can receive telematics and/or GPS data via CAN bus (35), the trailer access point microcontroller (60) comprising the interface to the on-board electronic systems and the trailer electronic braking system and an interface for sending and receiving data in a wireless format.

2. A trailer having a trailer vehicle function control system according to Claim 1, wherein the electronic control unit (13) receives data from at least one of a positioning system and a vehicle telematics system.

3. A trailer having a trailer vehicle function control system according to Claim 2, wherein the positioning system is GPS.

4. A trailer having a trailer vehicle function control system according to any one of Claims 1 to 3, wherein the trailer height is adjusted based on location of the trailer.

5. A trailer having a trailer vehicle function control system according to any one of Claims 2 to 4, wherein the system further comprises a manual reset key to enable the system to recalculate or update height in the event the information received from the positioning system or telematics is inaccurate.

6. A trailer having a trailer vehicle function control system according to any one of Claims 1 to 5, wherein the system further comprises programmable storage means adapted to store information on specific locations.

## Patentansprüche

1. Ein Anhänger mit einem Anhängerfahrzeug-Funktionssteuersystem, wobei das System Folgendes umfasst:
eine elektronische Steuereinheit (13) und einen Anhängerzugangspunkt-Mikrocontroller (60), wobei die elektronische Steuereinheit (13) darauf ausgelegt ist, die Höhe des Anhängers und einen CAN-Bus (35) zu steuern, und wobei das Steuersystem weiter ein Kommunikationsmittel umfasst, das darauf ausgelegt ist, Daten zur Anhängerhöhe zu empfangen, und wobei die Daten an die elektronische Steuereinheit (13) geleitet werden und die elektronische Steuereinheit (13) die tatsächliche Anhängerhöhe mit der Anhängerhöhe gemäß den empfangenen Daten vergleicht und, wenn die tatsächliche Anhängerhöhe sich von der Anhängerhöhe gemäß den empfangenen Daten unterscheidet, die Anhängerhöhe auf die Anhängerhöhe gemäß den empfangenen Daten anpasst, wobei
das System weiter eine normgerechte Kommunikationsschnittstelle (61) umfasst, die darauf ausgelegt ist, drahtlos mit einem von der Kommunikationsschnittstelle (61) entfernten elektronischen Gerät zu kommunizieren, wobei, wenn die Kommunikationsschnittstelle (61) Daten von dem Gerät zur Anhängerhöhe empfängt, die elektronische Steuereinheit (13) die Anhängerhöhe in Richtung auf die Anhängerhöhe gemäß den empfangenen Daten anpasst und wobei die elektronische Steuereinheit eine elektronische Anhänger-Bremssteuereinheit ist und die elektronische Anhänger-Bremssteuereinheit Telematik- und/oder GPS-Daten über den CAN-Bus (35) empfangen kann und der Anhängerzugangspunkt-Mikrocontroller (60) die Schnittstelle zur Bordelektronik und zum elektronischen Anhänger-Bremssystem und eine Schnittstelle zum drahtlosen Senden und Empfangen von Daten umfasst.

2. Ein Anhänger mit einem Anhängerfahrzeug-Funktionssteuersystem nach Anspruch 1, wobei die elektronische Steuereinheit (13) Daten von mindestens einer Option aus Positioniersystem oder Fahrzeug-Telematiksystem empfängt.

3. Ein Anhänger mit einem Anhängerfahrzeug-Funktionssteuersystem nach Anspruch 2, wobei das Positioniersystem ein GPS ist.

4. Ein Anhänger mit einem Anhängerfahrzeug-Funktionssteuersystem nach einem der Ansprüche 1 bis 3, wobei die Anhängerhöhe entsprechend dem Standort des Anhängers angepasst wird.

5. Ein Anhänger mit einem Anhängerfahrzeug-Funktionssteuersystem nach einem der Ansprüche 2 bis 4, wobei das System weiter eine manuelle Rückstelltaste umfasst, durch die das System in die Lage versetzt wird, die Höhe neu zu berechnen oder zu aktualisieren, falls die vom Positioniersystem oder Telematiksystem erhaltenen Informationen fehlerhaft sind.

6. Ein Anhänger mit einem Anhängerfahrzeug-Funktionssteuersystem nach einem der Ansprüche 1 bis 5, wobei das System weiter ein programmierbares Speichermittel umfasst, das darauf ausgelegt ist, Informationen über spezifische Standorte zu speichern.

## Revendications

1. Remorque ayant un système de commande de fonction de véhicule à remorque, le système comprenant un module de commande électronique (13) et comprenant un microcontrôleur de point d'accès de remorque (60), lequel module de commande électronique (13) est adapté à commander la hauteur de la remorque et un bus CAN (35), dans laquelle le système de commande comprend en outre des moyens de communication adaptés à recevoir des données concernant la hauteur de remorque, lesquelles données sont transmises au module de commande électronique (13), dans laquelle le module de commande électronique (13) compare la hauteur de remorque réelle aux données reçues concernant la hauteur de remorque et, si la hauteur de remorque réelle est différente de la hauteur de remorque des données reçues, ajuste la hauteur de remorque à la hauteur de remorque des données reçues, dans laquelle le système comprend en outre une interface de communications conforme aux normes (61) adaptée à communiquer sans fil avec un dispositif électronique à distance de l'interface de communications (61), dans laquelle lorsque l'interface de communications (61) reçoit des données du dispositif concernant la hauteur de remorque, le module de commande électronique (13) ajuste la hauteur de remorque en cours de route à la hauteur de remorque des données reçues, dans laquelle le module de commande électronique est un module de commande de frein électronique de remorque, lequel module de commande de frein électronique peut recevoir des données de télématique et/ou GPS par le biais du bus CAN (35), le microcontrôleur de point d'accès de remorque (60) comprenant l'interface aux systèmes électroniques embarqués et au système de freinage électronique de remorque, et une interface pour envoyer et recevoir des données dans un format sans fil.

2. Remorque ayant un système de commande de fonction de véhicule à remorque selon la revendication 1, dans laquelle le module de commande électronique (13) reçoit des données d'au moins un d'un système de positionnement et d'un système de télématique de véhicule.

3. Remorque ayant un système de commande de fonction de véhicule à remorque selon la revendication 2, dans laquelle le système de positionnement est un GPS.

4. Remorque ayant un système de commande de fonction de véhicule à remorque selon l'une quelconque des revendications 1 à 3, dans laquelle la hauteur de remorque est ajustée en fonction de l'emplacement de la remorque.

5. Remorque ayant un système de commande de fonction de véhicule à remorque selon l'une quelconque des revendications 2 à 4, dans laquelle le système comprend en outre une clé de réinitialisation manuelle pour permettre au système de recalculer ou mettre à jour la hauteur au cas où les informations reçues du système de positionnement ou de la télématique seraient incorrectes.

6. Remorque ayant un système de commande de fonction de véhicule à remorque selon l'une quelconque des revendications 1 à 5, dans laquelle le système comprend en outre des moyens de stockage programmables adaptés à stocker des informations sur des emplacements spécifiques.
